(19) Europäisches Patentamt / European Patent Office / Office européen des brevets

(11) **EP 4 579 001 A2**

(12) **EUROPEAN PATENT APPLICATION**

(43) Date of publication:
**02.07.2025  Bulletin 2025/27**

(21) Application number: **24220071.5**

(22) Date of filing: **16.12.2024**

(51) International Patent Classification (IPC):
***C25D 1/04*** (2006.01)   ***C25D 3/38*** (2006.01)

(52) Cooperative Patent Classification (CPC):
**C25D 1/04; C25D 3/38**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.12.2023  KR 20230197788**

(71) Applicant: **SK Nexilis Co., Ltd.**
**Jeollabuk-do 56137 (KR)**

(72) Inventor: **JIN, Shan Hua**
**56137 Jeongeup-si (KR)**

(74) Representative: **Ter Meer Steinmeister & Partner**
**Patentanwälte mbB**
**Nymphenburger Straße 4**
**80335 München (DE)**

(54) **COPPER FOIL AND METHOD OF MANUFACTURING THE SAME**

(57)     One embodiment of the present disclosure provides a copper foil including a copper film having a matte surface and a shiny surface, and a protective layer disposed on the copper film, wherein the copper film has a first surface in a direction of the matte surface and a second surface in a direction of the shiny surface, and Equation 1 below is satisfied.

$$[\text{Equation 1}]\ 45 \leq [(\text{average } 60°\text{gloss}) / (\text{G.U.}) \times (\text{average peak density}) / (\text{count})] / 100 \leq 70,$$

the average peak density in Equation 1 means an average value of peak densities of the first surface and the second surface, the peak density means a value acquired by dividing a peak count roughness (Rpc) by a surface area ratio, and the average 60° gloss in Equation 1 means an average value of 60° glosses of the first surface and the second surface.

# FIG. 1

## Description

This application claims the benefit of the Korean Patent Applications No. 10-2023-0197788 filed on December 29, 2023.

## BACKGROUND

### Field of the Invention

The present disclosure relates to a copper foil, an electrode including the same, a secondary battery including the same, and a method of manufacturing the same. More specifically, the present disclosure relates to a copper foil having excellent adhesive strength, an electrode including the same, a secondary battery including the same, and a method of manufacturing the same.

### Discussion of the Related Art

A copper foil is used to manufacture various products such as an anode for a secondary battery, a flexible printed circuit board (FPCB), and the like.

A copper foil can be manufactured in a roll-to-roll (RTR) process using electrolytic plating. This copper foil is used for manufacturing an anode for a secondary battery or manufacturing a flexible printed circuit board (FPCB) through the roll-to-roll (RTR) process.

An anode of a secondary battery generally includes a copper foil and an active material stacked on the copper foil. Since a volume of the active material expands or contracts during charging and discharging, the active material may be detached from the copper foil, and there is a problem in that a lifespan of the secondary battery is shortened due to the detachment of the active material. To this end, it is necessary to increase the adhesive strength between the copper foil and the active material.

## SUMMARY

At least one of these objects are solved by the features of the independent claims. Accordingly, the present disclosure relates to a copper foil, an electrode including the same, a secondary battery including the same, and a method of manufacturing the same, which may prevent problems caused by the above limitations and disadvantages of the related art.

In addition to the above-mentioned aspects of the present disclosure, other features and advantages of the present disclosure will be described below, or will be clearly understood by those skilled in the art from the following description.

One embodiment of the present disclosure provides a copper foil including a copper film having a matte surface and a shiny surface, and a protective layer disposed on the copper film, wherein the copper film has a first surface in a direction of the matte surface and a second surface in a direction of the shiny surface, and Equation 1 below is satisfied.

$$[Equation 1]$$

$$45 \leq [(\text{average } 60°\text{gloss}) / (\text{G.U.}) \text{ x } (\text{average peak density}) / (\text{count})] / 100 \leq 70.$$

The average peak density in Equation 1 means an average value of peak densities of the first surface and the second surface, the peak density means a value acquired by dividing a peak count roughness (Rpc) by a surface area ratio, and the average 60° gloss in Equation 1 means an average value of 60° glosses of the first surface and the second surface.

A difference between the peak density of the first surface and the peak density of the second surface may be 30 or less.

The protective layer may include at least one of a chromium compound, a silane compound, and a nitrogen compound.

Another embodiment of the present disclosure provides a method of manufacturing a copper foil including preparing an electrolyte including copper ions, forming a copper film, and forming a protective layer on the copper film, wherein the forming of the copper film includes allowing a cathode plate and a rotating anode drum disposed to be spaced apart from each other in an electrolyte in an electrolytic cell to conduct current to form the copper film on the rotating anode drum, the electrolyte includes 70 to 150 g/L of copper ions, 80 to 150 g/L of sulfuric acid, 15 to 25 ppm of chlorine (Cl), and an organic additive, the organic additive includes a polishing agent (component A), a moderator (component B), and a leveling agent (component C), and the leveling agent (component C) includes a polyethylene glycol (PEG) derivative.

The polishing agent (component A) may include sulfonic acid or a metal salt thereof.

The moderator (component B) may include a non-ionic water-soluble polymer.

In the PEG derivative, an end group may be substituted with a saturated hydrocarbon or a functional group.

The functional group may be at least one of an ethylene group, an acrylic group, and a bisphenol group.

The preparing of the electrolyte include filtering a first electrolyte transferred from a storage tank using carbon to form a second electrolyte.

The preparing of the electrolyte include adding the leveling agent (component C) to the second electrolyte to form the electrolyte.

Still embodiment of the present disclosure provides an electrode for a secondary battery including a copper foil, and an active material layer disposed on at least one surface of the copper foil.

Yet another embodiment of the present disclosure provides a secondary battery including a cathode providing lithium ions during charging, an anode providing electrons and lithium ions during discharging, an electrolyte disposed between the cathode and the anode and providing an environment in which the lithium ions can move, and a separator that electrically insulates the cathode and the anode.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:

FIG. 1 is a cross-sectional view of a copper foil according to one embodiment of the present disclosure;

FIG. 2 is a cross-sectional view of an electrode for a secondary battery according to another embodiment of the present disclosure;

FIG. 3 is a cross-sectional view of an electrode for a secondary battery according to still another embodiment of the present disclosure;

FIG. 4 is a schematic cross-sectional view of a secondary battery according to yet another embodiment of the present disclosure;

FIG. 5 illustrates a copper foil manufacturing apparatus according to yet another embodiment of the present disclosure; and

FIG. 6 is a schematic diagram illustrating a circulation process of an electrolyte according to the present disclosure.

## DETAILED DESCRIPTION OF THE DISCLOSURE

Hereinafter, embodiments of the present disclosure will be described in detail with reference to the accompanying drawings. However, the embodiments described below are presented only for illustrative purposes to facilitate a clear understanding of the present disclosure and do not limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, the plural form is included unless otherwise specified. In addition, in interpreting a component, it is interpreted as including an error range even when not explicitly stated.

In describing a positional relationship, for example, when a positional relationship of two parts is described as being "on," "above," "below, "next to," or the like, unless "immediately" or "directly" is used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal relationship is described as being "after," "subsequent," "next to," "prior to," or the like, unless "immediately" or "directly" is used, cases that are not continuous may also be included.

In order to describe various components, terms such as "first," "second," and the like are used, but these components are not limited by these terms. These terms are only used to distinguish one component from another component. Therefore, a first component described below may be a second component within the technical idea of the present disclosure.

The term "at least one" should be understood to include all possible combinations from one or more related items. For example, the meaning of "at least one of first, second, and third items" may mean all combinations of two or more items of the first, second and third items as well as each of the first, second and third items.

The features of various embodiments of the present disclosure may be partially or wholly coupled to or combined with each other, and may be various technically linked or operated, and each of the embodiments may be implemented independently of each other or may be implemented together in a related relationship.

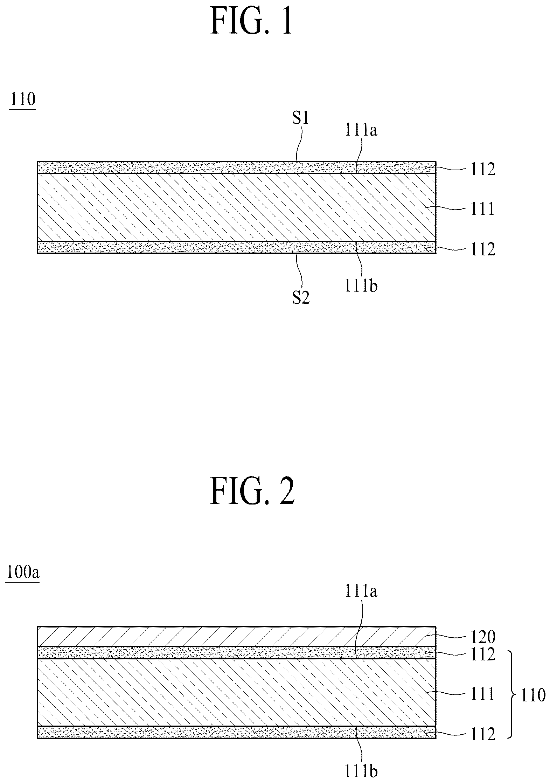

FIG. 1 is a cross-sectional view of a copper foil 110 according to one embodiment of the present disclosure.

Referring to FIG. 1, the copper foil 110 of the present disclosure includes a copper film 111 including copper in an amount of 99.9% or more by weight. Referring to FIG. 1, the copper foil 110 of the present disclosure includes the copper film 111 and a protective layer 112 disposed on the copper film 111. FIG. 1 illustrates a configuration in which the protective layers 112 are disposed on both surfaces of the copper film 111. However, one embodiment of the present disclosure is not limited thereto, and although not shown in the drawing, the protective layer 112 may be disposed on one surface of the copper film 111.

The copper film 111 may be formed on a rotating anode drum through electroplating and may have a shiny surface 111b that is in direct contact with the rotating anode drum in an electroplating process and a matte surface 111a at an opposite side of the shiny surface 111b.

The protective layer 112 is formed by electrodepositing an anticorrosion material on the copper film 111. The anticorrosion material may include at least one of a chromium compound, a silane compound, and a nitrogen compound. The protective layer 112 increases a lifespan of the copper foil 110 itself as well as a lifespan of a final product including the same by preventing oxidation and corrosion of the copper film 111 and enhancing heat resistance.

According to one embodiment of the present disclosure, a copper foil 110 has a first surface S1 in a direction of a matte surface 11 1a of a copper film 111 and a second surface S2 in a direction of a shiny surface 111b. In this case, the copper foil 110 according to one embodiment of the present disclosure may satisfy Equation 1 below.

[Equation 1]

$$45 \leq [(\text{average } 60° \text{ gloss}) / (\text{G.U.}) \times (\text{average peak density}) / (\text{count})] / 100 \leq 70$$

Specifically, when the copper foil 110 according to one embodiment of the present disclosure satisfies Equation 1, since the surface uniformity in a wide area of the copper foil 110 is high while a sufficient active specific surface area in a fine area of the copper foil 110 is secured, sufficient adhesion between the copper foil 110 and an active material may be secured.

On the other hand, when a value of Equation 1 is less than 45, the average peak density may be excessively low, and accordingly, since the active specific surface area in the fine area of the copper foil 110 is too small, sufficient adhesion between the copper foil 110 and the active material may not be secured. Further, the average 60° gloss may be excessively low, and accordingly, since surface properties in the wide area of the copper foil 110 become non-uniform, it may be difficult to secure sufficient adhesion between the copper foil 110 and the active material.

In this case, a larger value of the peak density of the copper foil 110 does not necessarily mean a smaller value of the 60° gloss.

Further, when the value of Equation 1 exceeds 70, the average peak density may be excessively high, and accordingly, since the coating uniformity with the active material deteriorates, the adhesion between the copper foil 110 and the active material may significantly deteriorate. Further, the average 60° gloss may be excessively high, and accordingly, since the active specific surface area in the wide area of the copper foil 110 is too small, sufficient adhesion between the copper foil 110 and the active material may not be secured.

In this case, the 60° gloss in Equation 1 was measured as a gloss at 60° incident angles of the first surface S1 and the second surface S2 using a gloss meter (Nippon Denshoku's VG7000) according to the JIS Z 8741 standard.

Further, the average peak density in Equation 1 means an average value of the peak densities of the first surface and the second surface, and the peak density means a value acquired by dividing a peak count roughness (Rpc) for the first surface S1 and the second surface S2 by the surface area ratio.

In this case, the peak count roughness (Rpc) is an average value of peak count roughnesses (Rpc) of three arbitrary points, and the peak count roughness (Rpc) of each of the points means the number of valid peaks rising above an upper criteria line C1 of 0.5 μm per a unit sampling length of 4 mm in a surface roughness profile acquired according to the steel-iron test schedule (SEP 1940) standard. The surface area ratio means a ratio of the three-dimensional surface area for each of the first surface S1 and the second surface S2 to a two-dimensional surface area for each of the first surface S1 and the second surface S2.

According to one embodiment of the present disclosure, the difference between the peak density of the first surface S1 and the peak density of the second surface S2 may be 30 or less.

Specifically, when the difference between the peak density of the first surface S1 and the peak density of the second surface S2 is 30 or less, since the difference in surface properties between the first surface S1 and the second surface S2 is small, coating uniformity with the active material is enhanced and thus sufficient adhesion between the copper foil 110 and the active material may be secured.

On the other hand, when the difference between the peak density of the first surface S1 and the peak density of the second surface S2 exceeds 30, since the difference in the surface properties between the first surface S1 and the second surface S2 becomes large, the coating uniformity of the active material deteriorates, and thus it may be difficult to secure sufficient adhesion between the copper foil 110 and the active material.

The copper foil 110 according to one embodiment of the present disclosure has a thickness of 4 $\mu$m to 35 $\mu$m. When the copper foil 110 is used as a current collector of an electrode in a secondary battery, as the thickness of the copper foil 110 becomes smaller, more current collectors can be accommodated in the same space, which is advantageous for high capacity of the secondary battery. However, the manufacture of the copper foil 110 having a thickness of less than 4 $\mu$m causes a decrease in workability.

On the other hand, when the secondary battery is manufactured with the copper foil 110 having a thickness exceeding 35 $\mu$m, it becomes difficult to achieve high capacity due to the thick copper foil 110.

Hereinafter, an electrode 100 including the copper foil 110 of the present disclosure and a secondary battery including the electrode 100 will be described in detail.

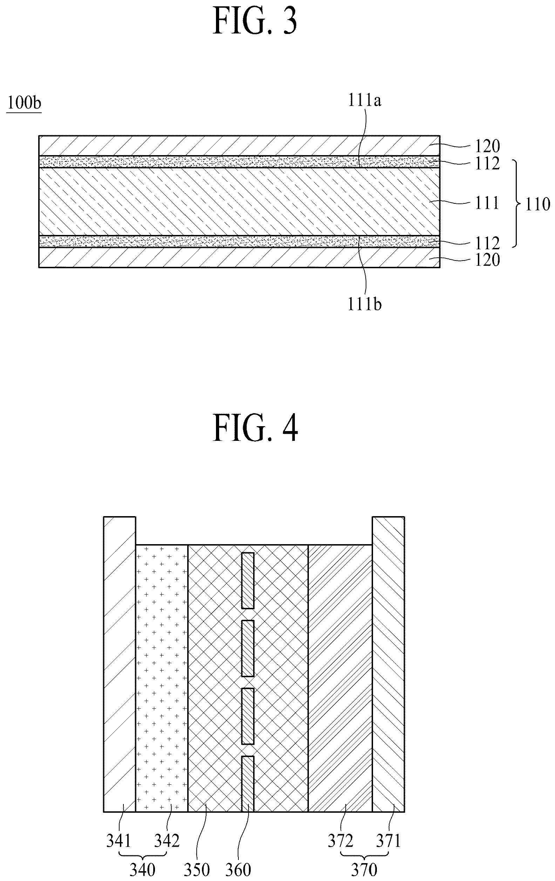

FIG. 2 is a cross-sectional view of an electrode 100a for a secondary battery according to one embodiment of the present disclosure. FIG. 3 is a cross-sectional view of an electrode 100b for a secondary battery according to another embodiment of the present disclosure.

As illustrated in FIG. 2, the electrode 100a for a secondary battery according to one embodiment of the present disclosure includes the copper foil 110 of one of the above-described embodiments of the present disclosure and an active material layer 120.

FIG. 2 illustrates a configuration in which the active material layer 120 is formed on one surface of the copper foil 110. However, the present disclosure is not limited thereto, and referring to FIG. 3, the active material layer 120 may be formed on each of both surfaces of the copper foil 110.

Generally, in a lithium secondary battery, an aluminum foil is used as a cathode current collector coupled to a cathode active material, and the copper foil 110 is used as an anode current collector coupled to an anode active material.

According to one embodiment of the present disclosure, the electrode 100 for a secondary battery is an anode, the copper foil 110 is used as an anode current collector, and the active material layer 120 includes an anode active material.

In order to secure high capacity of a secondary battery, the active material layer 120 of the present disclosure may be formed of a composite of carbon and metal. The metal may include, for example, at least one of silicon (Si), germanium (Ge), tin (Sn), lithium (Li), zinc (Zn), magnesium (Mg), cadmium (Cd), cerium (Ce), nickel (Ni), and iron (Fe), and preferably, may include Si and/or Sn.

FIG. 4 is a schematic cross-sectional view of a secondary battery according to one embodiment of the present disclosure.

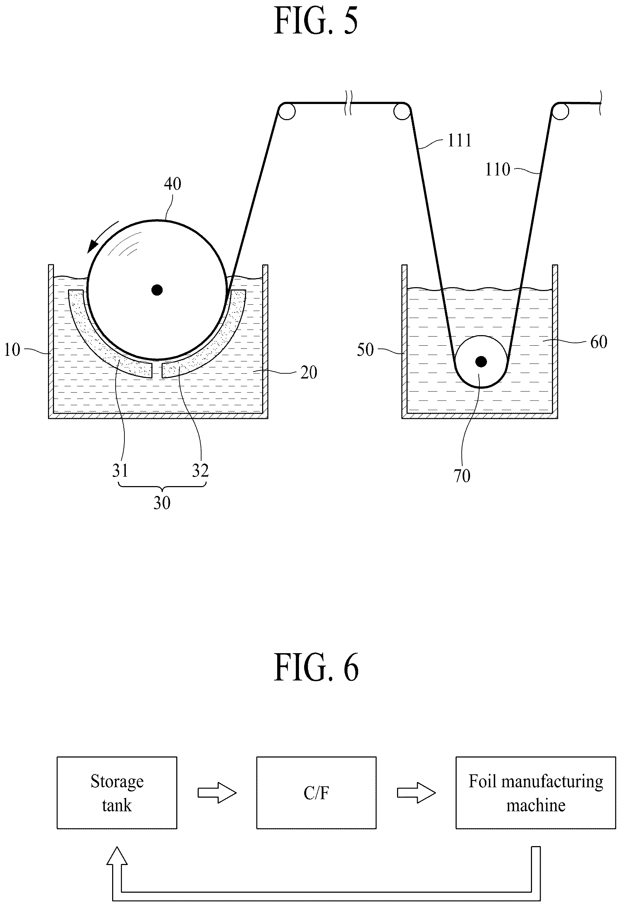

Referring to FIG. 4, the secondary battery includes a cathode 370, an anode 340, an electrolyte 350 disposed between the cathode 370 and the anode 340 to provide an environment in which ions are movable, and a separator 360 electrically insulating the cathode 370 and the anode 340. Here, the ions moving between the cathode 370 and the anode 340 are, for example, lithium ions. The separator 360 separates the cathode 370 and the anode 340 in order to prevent charges generated in one electrode from being uselessly consumed by moving to another electrode through the inside of the secondary battery. Referring to FIG. 5, the separator 360 is disposed in the electrolyte 350.

The cathode 370 includes a cathode current collector 371 and a cathode active material layer 372, and an aluminum foil may be used as the cathode current collector 371.

The anode 340 includes an anode current collector 341 and an anode active material layer 342, and the copper foil 110 may be used as the anode current collector 341.

According to one embodiment of the present disclosure, the copper foil 110 disclosed in FIG. 1 may be used as the anode current collector 341. In addition, the electrode 100a or 100b for a secondary battery illustrated in FIG. 2 or 3 may be used as the anode 340 of the secondary battery illustrated in FIG. 4.

Hereinafter, a method for manufacturing the copper foil 110 of the present disclosure will be described in detail with reference to FIGS. 5 and 6.

The method for manufacturing the copper foil 110 of the present disclosure includes forming a copper film 111, and forming a protective layer 112 on the copper film 111.

The method of the present disclosure includes forming the copper film 111 on a rotating anode drum 40 by electrically conducting a cathode plate 30 and the rotating anode drum 40, which are disposed to be spaced apart from each other in an electrolyte 20 in an electrolytic cell 10.

As illustrated in FIG. 5, the cathode plate 30 may include first and second cathode plates 31 and 32 electrically insulated from each other.

The forming of the copper film 111 may be performed by forming a seed layer through electrical conduction between the first cathode plate 31 and the rotating anode drum 40, and then growing the seed layer through electrical conduction between the second cathode plate 32 and the rotating anode drum 40.

A current density provided by each of the first and second cathode plates 31 and 32 may be 30 to 130 ASD (A/dm2).

When the current density provided by each of the first and second cathode plates 31 and 32 is less than 30 ASD, a surface roughness of the copper foil 110 is reduced, and thus an adhesion between the copper foil 110 and the active material layer 120 may not be sufficient.

On the other hand, when the current density provided by each of the first and second cathode plates 31 and 32 is greater than 130 ASD, a surface of the copper foil 110 may be rough, and thus the active material may not be smoothly coated.

The surface characteristics of the copper film 111 may be changed according to a buffing or polishing degree of a surface of the rotating anode drum 40. For example, the surface of the rotating anode drum 40 may be polished using a polishing brush having a grit of #800 to #3000.

In the process of forming the copper film 111, the electrolyte 20 is maintained at a temperature of 40 °C to 60 °C. More specifically, the temperature of the electrolyte 20 may be maintained at 50 °C or higher. At this time, the physical, chemical, and electrical characteristics of the copper film 111 may be controlled by adjusting a composition of the electrolyte 20.

According to one embodiment of the present disclosure, an electrolyte 20 may include copper ions, sulfuric acid, chlorine (Cl), and an organic additive.

In order to facilitate the formation of the copper film 111 by electrodeposition of copper, a concentration of copper ions and a concentration of sulfuric acid in the electrolyte 20 are adjusted to 70 to 150 g/L and 80 to 150 g/L, respectively.

In one embodiment of the present disclosure, chlorine (Cl) includes both chlorine ions (Cl-) and chlorine atoms present in the molecule. Chlorine (Cl) may be used, for example, to remove silver (Ag) ions introduced into the electrolyte 20 in a process of forming the copper film 111. Specifically, chlorine (Cl) may precipitate silver (Ag) ions in the form of silver chloride (AgCl). This silver chloride (AgCl) may be removed by filtering.

When the concentration of chlorine (Cl) is less than 15 ppm, the removal of silver (Ag) ions is not smoothly performed. On the other hand, when the concentration of chlorine (Cl) exceeds 25 ppm, unnecessary reactions due to excessive chlorine (Cl) may occur. Accordingly, the concentration of chlorine (Cl) in the electrolyte 20 is adjusted to a range of 15 to 25 ppm.

According to one embodiment of the present disclosure, the electrolyte 20 may include an organic additive.

The organic additive included in the electrolyte 20 includes a polishing agent (component A), a moderator (component B), and a leveling agent (component C).

The polishing agent (component A) includes sulfonic acid or a metal salt thereof. The polishing agent (component A) may have a concentration of 1 to 20 ppm in the electrolyte 20.

The polishing agent (component A) may increase the charge amount of the electrolyte 20 to increase an electrodeposition rate of the copper, improve curl characteristics of the copper foil, and enhance the gloss of the copper foil 110. When the concentration of the polishing agent (component A) is less than 1 ppm, the gloss of the copper foil 110 is reduced, and when the concentration of the polishing agent (component A) exceeds 20 ppm, the weight of the copper foil 110 changes after immersion, or surface roughness changes may occur.

The polishing agent may include at least one of, for example, bis-(3-sulfopropyl)-disulfide disodium salt, 3-mercapto-1-propanesulfonic acid, 3-(N,N-dimethylthiocarbamoyl)-thiopropanesulfonate sodium salt, 3-[(amino-iminomethyl)thio]-1-propanesulfonate sodium salt, o-ethyldithiocarbonato-S-(3-sulfopropyl)-ester sodium salt, 3-(benzothiazolyl-2-mercapto)-propyl-sulfonic acid sodium salt, and ethylenedithiodipropylsulfonic acid sodium salt.

The moderator (component B) includes a non-ionic water-soluble polymer. The moderator (component B) may have a concentration of 0.1 to 10 ppm in the electrolyte 20.

The moderator (component B) reduces an electrodeposition rate of copper to prevent a rapid increase in roughness and a decrease in strength of the copper foil 110. This moderator (component B) is also referred to as an inhibitor or a suppressor.

When the concentration of the moderator (component B) is less than 0. 1 ppm, the roughness of the copper foil 110 rapidly increases, and a problem of a change in the surface condition of the copper foil 110 may occur. On the other hand, even when the concentration of the moderator (component B) exceeds 10 ppm, there is almost no change in the physical properties of the copper foil 110, such as appearance, gloss, roughness, strength, elongation rate, and the like.

Accordingly, the concentration of the moderator (component B) may be adjusted to a range of 0. 1 to 10 ppm without increasing manufacturing costs and wasting raw materials by unnecessarily increasing the concentration of the moderator (component B).

The moderator (component B) may include, for example, at least one non-ionic water-soluble polymer selected from polyethylene glycol (PEG), polypropylene glycol, a polyethylenepolypropylene copolymer, polyglycerin, polyethylene glycol dimethyl ether, hydroxyethylene cellulose, polyvinyl alcohol, stearic acid polyglycol ether, and stearyl alcohol polyglycol ether. However, the type of moderator is not limited thereto, and other non-ionic water-soluble polymers which may be used in the manufacture of a high-strength copper foil 110 may be used as moderators.

The leveling agent (component C) includes a polyethylene glycol (PEG) derivative. The leveling agent (component C) may have a concentration of 1 to 10 ppm in the electrolyte 20.

The leveling agent (component C) prevents excessively high peaks or excessively large protrusions from being generated on the copper film 111 so that the copper film 111 becomes macroscopically flat. The leveling agent (component C) may have a concentration of 1 to 10 ppm in the electrolyte 20.

Specifically, in the PEG derivative according to one embodiment of the present disclosure, an end group may be substituted with a saturated hydrocarbon or a functional group. In this case, the functional group may include at least one of an ethylene group, an acrylic group, and a bisphenol group. In this case, PEG means polyethylene glycol.

Specifically, in the case of PEG, generally, a hydroxyl group (-OH) is present as an end group, and the hydroxyl group (-OH) which is present as an end group may react with other additives added in the electrolyte such that the properties of the copper foil may deteriorate.

In this case, when the end group of the PEG derivative is substituted with a saturated hydrocarbon or a functional group including at least one of an ethylene group, an acrylic group, and a bisphenol group, since the end group of the PEG derivative is stabilized, an effect caused by various by-products in the electrolyte due to long-term use may be small. Specifically, there is an advantage in that defects in plating such as pinholes and the like may be reduced compared to an unsubstituted PEG derivative.

When the concentration of the leveling agent (component C) is less than 1 ppm, the strength of the copper foil 110 deteriorates, making it difficult to manufacture a high-strength copper foil 110.

On the other hand, when the concentration of the leveling agent (component C) exceeds 10 ppm, since the surface roughness of the copper foil 110 excessively increases, the strength may deteriorate, and since pinholes or curls occur in the surface of the copper foil 110, it may be difficult to separate the copper foil 110 from a winder WR after manufacturing the copper foil 110.

The leveling agent (component C) may include, for example, at least one of PEG-isodecyl ether, PEG-glyceryl ether, PEG-butyl ether, PEG-hexylene glycol, PEG-trimethylolpropane, PEG-allylether, PEG-methacrylate, PEG-acrylate, PEG-bisphenol A ether.

When the copper film 111 is formed, a flow rate of the electrolyte 20 supplied to the electrolytic cell 10 may be 41 to 45 m$^3$/hour.

FIG. 6 is a schematic diagram illustrating a circulation process of the electrolyte according to the present disclosure.

According to one embodiment of the present disclosure, an operation of preparing the electrolyte may include an operation of filtering (C/F) a first electrolyte transferred from a storage tank using carbon to form a second electrolyte, and an operation of adding the leveling agent (component C) to the filtered second electrolyte to form the electrolyte.

Specifically, the first electrolyte transferred from the storage tank may include copper ions, sulfuric acid, chlorine, an organic additive, and the like.

The process of filtering (C/F) the first electrolyte using carbon means an operation of removing organic and inorganic impurities present in the first electrolyte.

According to one embodiment of the present disclosure, the second electrolyte means an electrolyte in which the first electrolyte has been filtered using carbon.

According to one embodiment of the present disclosure, the leveling agent (component C) may be added to the second electrolyte to form the electrolyte. The additives included in the electrolyte have already been described above and thus will be omitted. Specifically, the leveling agent (component C) is added after the filtering (C/F) process.

For example, when the leveling agent (component C) is added before the filtering (C/F) process, the leveling agent (component C) deteriorates and the physical properties of the copper foil may deteriorate. On the other hand, when the leveling agent (component C) is added after the filtering (C/F) process, the leveling agent (component C) is prevented from deteriorating, which is effective in improving the physical properties according to the present disclosure.

The electrolyte formed by adding the leveling agent (component C) is put in the electrolytic cell 10, and the copper foil is manufactured using a foil manufacturing machine including a rotating anode drum 40 disposed in the electrolytic cell 10 and a cathode plate 30 disposed spaced apart from the rotating anode drum 40.

In addition, in order to maintain the cleanliness of the electrolyte 20, a copper (Cu) wire used as a raw material for the electrolyte 20 may be cleaned.

According to one embodiment of the present disclosure, preparing the electrolyte 20 may include heat-treating a Cu wire, acid-cleaning the heat-treated Cu wire, water-cleaning the acid-cleaned Cu wire, and inputting the water-cleaned Cu wire into sulfuric acid for an electrolyte.

More specifically, in order to maintain the cleanliness of the electrolyte 20, a Cu wire with a high purity (99.9% or more) is heat-treated in an electric furnace at a temperature of 750 °C to 850 °C to burn various organic impurities attached to the Cu wire, the heat-treated Cu wire is acid-cleaned using a 10% sulfuric acid solution for 10 to 20 minutes, and the acid-cleaned Cu wire is then water-cleaned using distilled water, thereby preparing copper for manufacturing the electrolyte 20. The water-cleaned Cu wire may be input into sulfuric acid for an electrolyte to prepare the electrolyte 20.

According to one embodiment of the present disclosure, in order to satisfy the characteristics of the copper foil 110, a concentration of total organic carbon (TOC) in the electrolyte 20 is controlled to be 300 ppm or less. That is, the electrolyte 20 may have a TOC concentration of 300 ppm or less.

The copper film 111 thus prepared may be cleaned in a cleaning bath.

For example, an acid cleaning process for removing impurities on a surface of the copper film 111, for example, resin components or natural oxides, and a water cleaning process for removing acidic solutions used for the acid cleaning may be sequentially performed. The cleaning process may be omitted.

Next, the protective layer 112 is formed on the copper film 111.

Referring to FIG. 5, the method may further include immersing the copper film 111 in an anticorrosion solution 60. When the copper film 111 is immersed in the anticorrosion solution 60, the copper film 111 may be guided by a guide roll disposed in the anticorrosion solution 60.

As described above, the anticorrosion solution 60 may include at least one of a chromium compound, a silane compound, and a nitrogen compound. For example, the copper film 111 may be immersed in a potassium dichromate solution of 1 g/L to 10 g/L at room temperature for 1 to 30 seconds.

Meanwhile, the protective layer 112 may include a silane compound by silane treatment or a nitrogen compound by nitrogen treatment.

The copper foil 110 is formed by forming the protective layer 112.

At least one anode active material selected from the group consisting of carbon, a metal (Me) of Si, Ge, Sn, Li, Zn, Mg, Cd, Ce, Ni or Fe, an alloy including the metal (Me), an oxide (MeOx) of the metal (Me), and a complex of the metal (Me) and carbon is coated on one surface or both surfaces the copper foil 110 of the present disclosure prepared through the method as described above to prepare an electrode (i.e., anode) for a secondary battery of the present disclosure.

For example, 1 to 3 parts by weight of styrene butadiene rubber (SBR) and 1 to 3 parts by weight of carboxymethyl cellulose (CMC) are mixed with 100 parts by weight of carbon for an anode active material to prepare a slurry using distilled water as a solvent. Subsequently, the slurry is applied to the copper foil 110 using a doctor blade to a thickness of 20 $\mu$m to 60 $\mu$m and pressed at 110 °C to 130 °C and at a pressure of 0.5 to 1.5 ton/cm$^2$.

A secondary battery may be manufactured using the electrode (anode) for a secondary battery of the present disclosure prepared through the method as described above, together with the conventional cathode, electrolyte, and separator.

Hereinafter, the present disclosure will be described in detail with reference to examples and comparative examples. However, the examples described below are only for the understanding of the present disclosure, and the scope of the present disclosure is not limited to these manufacturing examples.

Examples 1 to 4 and Comparative Examples 1 to 4

A copper foil was manufactured using a foil manufacturing machine including an electrolytic cell 10, a rotating anode drum 40 disposed in the electrolytic cell 10 and a cathode plate 30 disposed spaced apart from the rotating anode drum 40. An electrolyte 20 is a copper sulfate solution. A concentration of copper ions in the electrolyte 20 was set to 87 g/L, a concentration of sulfuric acid was set to 110 g/L, a temperature of the electrolyte was set to 55°C, and a current density was set to 60 ASD.

Further, a concentration of chlorine (Cl) in the electrolyte 20 was maintained at 20 ppm, and a concentration of an organic additive is as shown in Table 1 below. In this case, the leveling agent was added to a filtered electrolyte after filtering the electrolyte using carbon.

Among the organic additives, bis-(3-sulfopropyl)-disulfide disodium salt (SPS) was used as a polishing agent (component A), polyethylene glycol (PEG) was used as a moderator (component B), and PEG-methacrylate was used as a leveling agent (component C).

The copper film 111 was manufactured by applying a current at a current density of 60 ASD between the rotating anode drum 40 and the cathode plate 30. Next, the copper foil was manufactured by immersing the copper film 111 in an anticorrosion solution for about 2 seconds and performing chromate treatment on both surfaces of the copper film 111 to form a protective layer 112. An anticorrosion solution using a chromic acid as a main component was used as the anticorrosion solution, and the concentration of chromic acid was 5 g/L.

As a result, the copper foils of Examples 1 to 4 and Comparative Examples 1 to 4 were manufactured. In this case, a thickness of the manufactured copper foil is 8 $\mu$m.

[Table 1]

|  | SPS (ppm) | PEG (ppm) | PEG-methacrylate (ppm) |
|---|---|---|---|
| Example 1 | 13 | 5 | 3 |
| Example 2 | 18 | 5 | 8 |
| Example 3 | 7 | 5 | 3 |
| Example 4 | 1 | 12 | 8 |
| Comparative Example 1 | 5 | 5 | 0.1 |
| Comparative Example 2 | 5 | 5 | 20 |
| Comparative Example 3 | 50 | 5 | 20 |
| Comparative Example 4 | 5 | 50 | 0 |

[Table 2]

| Classificatio n | 60° gloss (G.U) of first surface | 60° gloss (G.U) of second surface | Peak count roughness of first surface (count) | Peak count roughness of second surface (count) | Surface area ratio of first surface | Surface area ratio of second surface |
|---|---|---|---|---|---|---|
| Example 1 | 98 | 178 | 45 | 28 | 1.0054 | 1.0025 |
| Example 2 | 102 | 178 | 60 | 35 | 1.0072 | 1.0018 |
| Example 3 | 99 | 174 | 48 | 18 | 1.0084 | 1.0034 |
| Example 4 | 100 | 175 | 55 | 25 | 1.1212 | 1.0074 |
| Comparative Example 1 | 150 | 212 | 55 | 23 | 1.0052 | 1.0023 |
| Comparative Example 2 | 153 | 230 | 56 | 20 | 1.0071 | 1.0020 |
| Comparative Example 3 | 92 | 179 | 80 | 43 | 1.0085 | 1.0035 |
| Comparative Example 4 | 98 | 177 | 38 | 15 | 1.1011 | 1.0072 |

[Table 3]

| Classificati on | Average 60°gloss (G.U) | Peak density of first surface (count) | Peak density of second surface (count) | Difference between first surface/second surface peak densities (count) | Average peak density | Value of Equation 1 (G.U.) | Adhesion of active material |
|---|---|---|---|---|---|---|---|
| Example 1 | 138 | 44.75 | 27.93 | 16.82 | 36.34 | 50.14 | Good adhesion |
| Example 2 | 140 | 59.57 | 34.93 | 24.64 | 47.25 | 66.15 | Good adhesion |
| Example 3 | 136.5 | 47.60 | 17.93 | 29.67 | 32.76 | 44.71 | Good adhesion |
| Example 4 | 137.5 | 49.05 | 24.81 | 24.24 | 36.93 | 50.77 | Good adhesion |
| Comparati ve Example 1 | 181 | 54.71 | 22.94 | 31.77 | 38.82 | 70.26 | Poor adhesion |

(continued)

| Classification | Average 60°gloss (G.U) | Peak density of first surface (count) | Peak density of second surface (count) | Difference between first surface/second surface peak densities (count) | Average peak density | Value of Equation 1 (G.U.) | Adhesion of active material |
|---|---|---|---|---|---|---|---|
| Comparative Example 2 | 191.5 | 55.60 | 19.96 | 35.64 | 37.78 | 72.15 | Poor adhesion |
| Comparative Example 3 | 135.5 | 79.32 | 42.85 | 36.47 | 61.08 | 82.76 | Poor adhesion |
| Comparative Example 4 | 137.5 | 34.51 | 14.89 | 19.62 | 24.7 | 33.96 | Poor adhesion |

For the copper foils of Examples 1 to 4 and Comparative Examples 1 to 4 manufactured as described above, i) the 60° glosses of the first surface and the second surface ii) the peak count roughnesses of the first surface and the second surface iii) the surface area ratios of the first surface and the second surface iv) the average 60°gloss v) the peak densities of the first surface and the second surface vi) the difference between the peak densities of the first surface/second surface vii) the average peak density viii) the value of Equation 1 and ix) the adhesion of the active material were checked.

A 10 x 10 cm sample of was acquired by cutting the copper foil.

i) 60° glosses of first surface and second surface

The 60° gloss was measured as a gloss at 60° incident angles of both surfaces of the sample using a gloss meter (Nippon Denshoku's VG7000) according to the JIS Z 8741 standard.

ii) Peak count roughnesses of first surface and second surface

The peak count roughness (Rpc) is an average value of the peak count roughnesses (Rpc) of three arbitrary points, and the peak count roughness (Rpc) of each of the points means the number of the valid peaks rising above the upper criteria line of 0.5 $\mu$m per a unit sampling length of 4 mm in the surface roughness profile acquired according to the steel-iron test schedule (SEP 1940) standard.

In this case, at least one valley deeper than a lower criteria line of -0.5 $\mu$m is present between neighboring valid peaks among the valid peaks. When no valley deeper than the lower criteria line of -0.5 $\mu$m is present between the neighboring peaks rising above the upper criteria line, not all of the neighboring peaks may be "valid peaks" used for measuring the peak count roughness (Rpc), and the relatively lower peaks among the peaks are ignored when calculating the number of "valid peaks."

iii) Surface area ratios of first surface and second surface

The surface area ratios of the first surface and the second surface were measured using KEYENCE's VK-9710. In this case, the surface area ratios of the first surface and the second surface respectively mean ratios of the three-dimensional surface areas of the first surface and the second surface to the two-dimensional surface areas of the first surface and the second surface. Specifically, a specimen was manufactured by cutting a copper foil into a size of 1 cm x 1 cm, and the copper foil specimen was observed at a magnification of 50x to observe the three-dimensional surface areas using KEYENCE's VK-9710, which is a color three-dimensional (3D) laser microscope. The "surface area ratios of the first surface and the second surface" are values acquired by dividing a three-dimensional surface area of the copper foil specimen measured in three dimensions by a two-dimensional planar area (1 cm$^2$) of the copper foil specimen. Here, the three-dimensional surface area is an area acquired by focusing a lens of the microscope by moving the lens in a z-axis direction.

iv) Average 60° gloss

The average 60° gloss means an average value of the 60° glosses of the first surface and second surface measured above. Specifically, the average 60° gloss means half of the sum of the 60° glosses of the first surface and the second surface.

v) Peak densities of first surface and second surface

The peak densities of the first surface and the second surface mean values acquired by dividing the peak count roughnesseses of the first surface and the second surface measured above by the surface area ratios of the first surface and the second surface.

vi) Peak density difference between first surface/second surface

The difference between the peak densities of the first surface and the second surface means a value acquired by subtracting the peak density value of the second surface measured above from the peak density value of the first surface measured above.

vii) Average peak density

The average peak density means an average value of the peak densities of the first surface and the second surface measured above. Specifically, the average peak density means half of the sum of the peak densities of the first surface and the second surface.

viii) Value of Equation 1

The value of Equation 1 is calculated by Equation 1 below.

$$[\text{Equation 1}]$$
$$[(\text{average } 60° \text{ gloss}) / (\text{G.U}) \times (\text{average peak density}) / (\text{count})] / 100$$

ix) Adhesion of active material

After forming an anode active material layer by disposing an anode active material on the copper foil manufactured in Examples 1 to 4 and Comparative Examples 1 to 4, the peel strength of the copper foil and the active material was measured using a universal test machine (UTM).

1) Manufacture of anode

An anode active material slurry was prepared by mixing 100 parts by weight of commercially available carbon for an anode active material, with 2 parts by weight of styrene butadiene rubber (SBR) and 2 parts by weight of carboxymethyl cellulose (CMC), and using distilled water as a solvent. An anode for a secondary battery was manufactured by applying the anode active material slurry to a thickness of 40 $\mu$m on a copper foil having a width of 10 cm (Examples and Comparative Examples) using a doctor blade, drying the applied slurry at 120°C, and pressing the applied slurry at a pressure of 1 ton/cm$^2$.

2) Measurement method

One surface of a double-sided tape was attached to slide glass, and the active material portion of the anode for a secondary battery was attached to the other surface of the double-sided tape. Adhesive strength was measured while peeling the copper foil after fixing the slide glass to a lower portion of a universal test machine (UTM).

- Measurement tester: Universal test machine (UTM)
- Width of the sample: 12.7 mm
- Measurement type: 180° Peel Test
- Measurement speed: 50 mm/min

In this case, when the measured adhesive strength is 27 N/m or more, the adhesion with the active material is excellent and thus is marked as 'good adhesion' in Table 3, and when the measured adhesive strength is less than 27 N/m, the adhesion with the active material is poor and thus is marked as 'poor adhesion' in Table 3.

Referring to Tables 1 to 3, the copper foils according to Examples 1 to 4 had excellent adhesion with the active material, and the copper foils according to Comparative Examples 1 to 4 had poor adhesion with the active material.

A copper foil according to the present disclosure can have excellent adhesive strength. Accordingly, when the copper foil according to one embodiment of the present disclosure is used in an electrode for a secondary battery, since the adhesive strength between the copper foil and an active material is enhanced, the lifespan and reliability of a secondary battery can be enhanced.

It will be apparent to those skilled in the art that the present disclosure described above is not limited by the above-described embodiments and the accompanying drawings and that various substitutions, modifications, and variations can be made in the present disclosure without departing from the scope of the present disclosure. Accordingly, the scope of the present disclosure is defined by the accompanying claims, and it is intended that all variations and modifications derived from the meaning, scope, and equivalent concept of the claims fall within the scope of the present disclosure.

**Claims**

1.  A copper foil comprising:

    a copper film having a matte surface and a shiny surface; and
    a protective layer disposed on the copper film,
    wherein the copper film has a first surface in a direction of the matte surface and a second surface in a direction of the shiny surface, and
    Equation 1 below is satisfied,

    [Equation 1]

    $$45 \leq [(\text{average } 60°\text{gloss}) / (\text{G.U.}) \times (\text{average peak density}) / (\text{count})] / 100 \leq 70,$$

    the average peak density in Equation 1 means an average value of peak densities of the first surface and the second surface, the peak density means a value acquired by dividing a peak count roughness (Rpc) by a surface area ratio, and the average 60° gloss in Equation 1 means an average value of 60° glosses of the first surface and the second surface.

2.  The copper foil of claim 1, wherein a difference between the peak density of the first surface and the peak density of the second surface is 30 or less.

3.  The copper foil of claim 1 or 2, wherein the protective layer includes at least one of a chromium compound, a silane compound, and a nitrogen compound.

4.  A method of manufacturing a copper foil, comprising:

    preparing an electrolyte including copper ions;
    forming a copper film; and
    forming a protective layer on the copper film,
    wherein the forming of the copper film includes allowing a cathode plate and a rotating anode drum disposed to be spaced apart from each other in an electrolyte in an electrolytic cell to conduct current to form the copper film on the rotating anode drum,
    the electrolyte includes: 70 to 150 g/L of copper ions; 80 to 150 g/L of sulfuric acid; 15 to 25 ppm of chlorine (Cl); and an organic additive,
    the organic additive includes a polishing agent (component A), a moderator (component B), and a leveling agent (component C), and
    the leveling agent (component C) includes a polyethylene glycol (PEG) derivative.

5.  The method of claim 4, wherein:

    the polishing agent (component A) includes sulfonic acid or a metal salt thereof; and
    the moderator (component B) includes a non-ionic water-soluble polymer.

6.  The method of claim 4 or 5, wherein, in the PEG derivative, an end group is substituted with a saturated hydrocarbon or a functional group.

7.   The method of claim 6, wherein the functional group is at least one of an ethylene group, an acrylic group, and a bisphenol group.

8.   The method of claim 4, 5, 6, or 7, wherein the preparing of the electrolyte includes:

   filtering a first electrolyte transferred from a storage tank using carbon to form a second electrolyte; and
   adding the leveling agent (component C) to the second electrolyte to form the electrolyte.

# FIG. 1

# FIG. 2

# FIG. 3

100b

111a

120
112
111
112
120

110

111b

# FIG. 4

341  342     350  360        372  371

340                          370

# FIG. 5

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230197788